# FASCICULE DE BREVET EUROPEEN

(11) **EP 3 103 678 B1**
(45) Date de publication et mention de la délivrance du brevet: **16.05.2018**
(21) Numéro de dépôt: 16173323.3
(22) Date de dépôt: 07.06.2016
(51) Int. Cl.: B60N 2/58

(54) **COIFFE DE REVÊTEMENT D'UNE MATELASSURE DE GARNISSAGE D'UN ÉLÉMENT DE SIÈGE DE VÉHICULE AUTOMOBILE**
VERKLEIDUNGSÜBERZUG EINER POLSTERUNG ZUM AUSFÜTTERN EINES SITZELEMENTS EINES KRAFTFAHRZEUGS
COVER FOR COATING A LINING CUSHION OF A MOTOR VEHICLE SEAT ELEMENT

(30) Priorité: 08.06.2015 FR 1555219
(43) Date de publication de la demande: 14.12.2016
(73) Titulaire: Cera TSC, 75008 Paris (FR)
(72) Inventeur: BLAY, Bernard, 60280 Bienville (FR); GANIER, David, 02190 Guignicourt (FR); GUSTIN, José, 08310 Machault (FR)
(74) Mandataire: Sayettat, Julien Christian

(56) Documents cités:
- FR-A1- 2 939 377
- FR-A1- 2 983 112
- US-A1- 2005 103 247

## Description

L'invention concerne une coiffe de revêtement d'une matelassure de garnissage d'un élément de siège de véhicule automobile, une matelassure comprenant une telle coiffe, un élément comprenant une telle matelassure et un procédé de réalisation d'une telle coiffe.

Il est connu de réaliser une coiffe de revêtement d'une matelassure de garnissage d'un élément de siège de véhicule automobile, ladite coiffe comprenant :
- un premier et un deuxième empiècement de revêtement associés l'un à l'autre par une couture de liaison formant un talon saillant vers l'intérieur de ladite coiffe,
- une couture d'aspect réalisée dans ledit premier empiècement à proximité de ladite couture de liaison et parallèlement à elle, ledit talon étant rabattu contre l'envers dudit premier empiècement et étant pris dans ladite couture d'aspect.
Une telle coiffe est connue du document FR-A-2 983 112. La mise en place d'une couture d'aspect telle que décrite ci-dessus répond à un impératif esthétique demandé en sellerie automobile où il peut être souhaité que la matelassure comprenne une ou plusieurs coutures visibles, ce qui n'est pas le cas des coutures de liaison.

On précise ici que, par le terme de « talon », on entend la partie de la coiffe comprenant deux épaisseurs d'empiècements qui s'étend entre la couture de liaison et les bords libres desdits empiècements, lesdits bords libres étant disposés bord à bord.

Le fait que le talon soit rabattu contre l'envers du premier empiècement et pris dans la couture d'aspect permet d'obtenir une couture d'aspect bosselée qui présente une esthétique avantageuse.

Pour obtenir une telle couture d'aspect, on doit coucher avec la main le talon sous l'aiguille pour permettre qu'il soit pris dans ladite couture.

Pour que l'opération puisse se faire aisément, il faut un talon de couture d'une largeur minimum de 8 mm, voire 10 mm.

Après réalisation de la couture d'aspect, on a donc une largeur de revêtement qui n'est d'aucune utilité pour le produit, et qui est donc perdue.

Sachant qu'un revêtement présente usuellement un coût important, il en résulte un surcoût pour le produit obtenu.

En outre, un talon de largeur importante entraîne une réalisation difficile de la couture d'aspect dans les zones courbes, obligeant à réaliser des découpes dans ledit talon - par exemple sous forme d'entailles en V ou de retraits plus étendus de matière - au niveau desdites zones courbes.

L'invention a pour but de pallier ces inconvénients.

A cet effet, et selon un premier aspect, l'invention propose une coiffe de revêtement d'une matelassure de garnissage d'un élément de siège de véhicule automobile, ladite coiffe comprenant :
- un premier et un deuxième empiècement de revêtement associés l'un à l'autre par une couture de liaison formant un talon saillant vers l'intérieur de ladite coiffe,
- une couture d'aspect réalisée dans ledit premier empiècement à proximité de ladite couture de liaison et parallèlement à elle, ledit talon étant rabattu contre l'envers dudit premier empiècement et étant pris dans ladite couture d'aspect,
ladite coiffe comprenant en outre une bande d'aide au rabattement dudit talon, ladite bande comprenant, disposées selon sa largeur, une zone médiane disposée entre une première et une deuxième zone latérale, ladite deuxième zone étant destinée à former zone de préhension pour réaliser l'aide au rabattement, ladite bande présentant successivement en section transversale :
- ladite première zone recouvrant la face dudit talon correspondant audit deuxième empiècement, ladite première zone présentant un bord libre pointant vers le bord libre dudit talon et un bord non libre associé par ladite couture de liaison,
- un pli d'un demi-tour,
- ladite zone médiane disposée en recouvrement de ladite première zone,
- une ligne de séparation entre ladite zone médiane et ladite deuxième zone, ladite ligne étant prise dans ladite couture d'aspect,
- ladite deuxième zone s'étendant au-delà de ladite couture d'aspect.

On notera que la présence d'un pli d'un demi-tour est dictée par un impératif de pose de la bande en aveugle lors de la réalisation de la couture de liaison, les bords libres du talon et de la première zone devant être disposés à proximité l'un de l'autre, voire être contigus.

L'agencement proposé permet de réduire la hauteur du talon, puisqu'on n'a plus besoin de le coucher avec la main, ledit talon étant couché au moyen de la bande d'aide au rabattement qui est agrippée par sa deuxième zone pour replier ladite bande d'un demi-tour, de manière à disposer la zone médiane en recouvrement de la première zone et à rabattre ledit talon contre l'envers du premier empiècement.

Il en résulte une diminution de la consommation de revêtement, la bande étant réalisée à partir d'un matériau de faible coût tel qu'un non tissé, ceci permettant de diminuer le coût du produit fini.

En outre, la réalisation de la couture d'aspect est facilitée dans les zones courbes où il n'est plus nécessaire de réaliser des découpes dans le talon au niveau desdites zones, ou du moins de réaliser des découpes plus limitées.

Selon d'autres aspects, l'invention propose une matelassure comprenant une telle coiffe, un élément comprenant une telle matelassure et un procédé de réalisation d'une telle coiffe.

D'autres particularités et avantages de l'invention apparaîtront dans la description qui suit, faite en référence aux figures jointes, dans lesquelles :

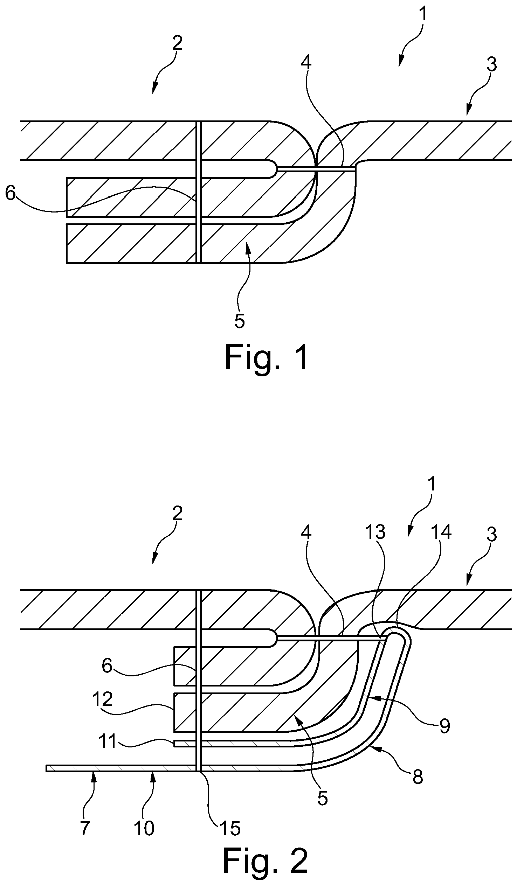

- la figure 1 est une coupe transversale schématique partielle d'une coiffe réalisée selon l'art antérieur,
- la figure 2 est une coupe transversale schématique partielle d'une coiffe réalisée selon un mode de réalisation de l'invention.

En référence aux figures, on décrit une coiffe 1 de revêtement d'une matelassure de garnissage d'un élément de siège de véhicule automobile, ladite coiffe comprenant :
- un premier 2 et un deuxième 3 empiècement de revêtement - par exemple à base de tissu ou de cuir - associés l'un à l'autre par une couture de liaison 4 formant un talon 5 saillant vers l'intérieur de ladite coiffe,
- une couture d'aspect 6 réalisée dans ledit premier empiècement à proximité de ladite couture de liaison et parallèlement à elle, ledit talon étant rabattu contre l'envers dudit premier empiècement et étant pris dans ladite couture d'aspect,
ladite coiffe comprenant en outre une bande 7 d'aide au rabattement dudit talon, ladite bande comprenant, disposées selon sa largeur, une zone médiane 8 disposée entre une première 9 et une deuxième 10 zone latérale, ladite deuxième zone étant destinée à former zone de préhension pour réaliser l'aide au rabattement, ladite bande présentant successivement en section transversale :
- ladite première zone recouvrant la face dudit talon correspondant audit deuxième empiècement, ladite première zone présentant un bord libre 11 pointant vers le bord libre 12 dudit talon et un bord non libre 13 associé par ladite couture de liaison,
- un pli 14 d'un demi-tour,
- ladite zone médiane disposée en recouvrement de ladite première zone,
- une ligne de séparation 15 entre ladite zone médiane et ladite deuxième zone, ladite ligne étant prise dans ladite couture d'aspect,
- ladite deuxième zone s'étendant au-delà de ladite couture d'aspect.

Selon la réalisation représentée, le bord libre 11 de la première zone 9 est disposé bord à bord avec le bord libre 12 du talon 5, de sorte que la couture de la bande 7 par la couture de liaison 4 soit facilitée, l'opérateur de fabrication prenant pour repère ledit bord libre dudit talon pour positionner ledit bord libre de ladite première zone.

Selon une réalisation, la largeur de la bande 7 d'aide au rabattement mise à plat est supérieure ou égale à 18 mm, étant notamment de l'ordre de 20 mm.

Selon une réalisation, la largeur de la deuxième zone 10 est supérieure ou égale à 8 mm, de manière à permettre une préhension facilitée.

Selon une réalisation, la largeur du talon 5 est inférieure ou égale à 4 mm.

Selon une réalisation, la bande 7 d'aide au rabattement est à base de non tissé.

On décrit à présent, de façon non représentée, une matelassure comprenant une telle coiffe 1 et un bloc de rembourrage - par exemple à base de mousse élastiquement compressible - ladite coiffe revêtant - par exemple en étant surmoulée ou chaussée - ledit bloc.

On décrit à présent, de façon non représentée, un élément - par exemple une assise, un dossier ou un appui-tête - de siège de véhicule automobile comprenant une telle matelassure et une armature, ladite matelassure étant associée à ladite armature.

On décrit enfin un procédé de réalisation d'une telle coiffe 1, ledit procédé comprenant les étapes suivantes :
- prévoir un premier 2 et un deuxième 3 empiècement de revêtement,
- prévoir une bande 7 d'aide au rabattement, ladite bande comprenant, disposées selon sa largeur, une zone médiane 8 disposée entre une première 9 et une deuxième 10 zone latérale,
- associer lesdits empiècements entre eux par une couture de liaison 4 formant un talon 5 saillant vers l'intérieur de ladite coiffe, ladite première zone étant disposée en recouvrement de la face dudit talon correspondant audit deuxième empiècement, ladite première zone présentant un bord libre 11 pointant vers le bord libre 12 dudit talon et un bord non libre 13 associé par ladite couture de liaison,
- agripper ladite bande par ladite deuxième zone pour la replier d'un demi-tour, de manière à disposer ladite zone médiane en recouvrement de ladite première zone et à rabattre ledit talon contre l'envers dudit premier empiècement,
- réaliser sur la ligne de séparation 15 entre ladite zone médiane et ladite deuxième zone et dans ledit talon une couture d'aspect 6 parallèle à ladite couture de liaison.

## Revendications

1. Coiffe (1) de revêtement d'une matelassure de garnissage d'un élément de siège de véhicule automobile, ladite coiffe comprenant :
• un premier (2) et un deuxième (3) empiècement de revêtement associés l'un à l'autre par une couture de liaison (4) formant un talon (5) saillant vers l'intérieur de ladite coiffe,
• une couture d'aspect (6) réalisée dans ledit premier empiècement à proximité de ladite couture de liaison et parallèlement à elle, ledit talon étant rabattu contre l'envers dudit premier empiècement et étant pris dans ladite couture d'aspect,
ladite coiffe étant **caractérisée en ce qu'**elle comprend en outre une bande (7) d'aide au rabattement dudit talon, ladite bande comprenant, disposées selon sa largeur, une zone médiane (8) disposée entre une première (9) et une deuxième (10) zone latérale, ladite deuxième zone latérale étant destinée à former zone de préhension pour réaliser l'aide au rabattement, ladite bande présentant successivement en section transversale :
• ladite première zone recouvrant la face dudit talon correspondant audit deuxième empiècement, ladite première zone présentant un bord libre (11) pointant vers le bord libre (12) dudit talon et un bord non libre (13) associé par ladite couture de liaison,
• un pli (14) d'un demi-tour,
• ladite zone médiane disposée en recouvrement de ladite première zone,
• une ligne de séparation (15) entre ladite zone médiane et ladite deuxième zone, ladite ligne étant prise dans ladite couture d'aspect,
• ladite deuxième zone s'étendant au-delà de ladite couture d'aspect.

2. Coiffe selon la revendication 1, **caractérisée en ce que** le bord libre (11) de la première zone (9) est disposé bord à bord avec le bord libre (12) du talon (5).

3. Coiffe selon l'une des revendications 1 ou 2, **caractérisée en ce que** la largeur de la bande (7) d'aide au rabattement mise à plat est supérieure ou égale à 18 mm, étant notamment de l'ordre de 20 mm.

4. Coiffe selon l'une quelconque des revendications 1 à 3, **caractérisée en ce que** la largeur de la deuxième zone (10) est supérieure ou égale à 8 mm.

5. Coiffe selon l'une quelconque des revendications 1 à 4, **caractérisée en ce que** la largeur du talon (5) est inférieure ou égale à 4 mm.

6. Coiffe selon l'une quelconque des revendications 1 à 5, **caractérisée en ce que** la bande (7) d'aide au rabattement est à base de non tissé.

7. Matelassure comprenant une coiffe selon l'une quelconque des revendications 1 à 6 et un bloc de rembourrage, ladite coiffe revêtant ledit bloc.

8. Elément de siège de véhicule automobile comprenant une matelassure selon la revendication 7 et une armature, ladite matelassure étant associée à ladite armature.

9. Procédé de réalisation d'une coiffe selon l'une quelconque des revendications 1 à 6, ledit procédé comprenant les étapes suivantes :
• prévoir un premier (2) et un deuxième (3) empiècement de revêtement,
• prévoir une bande (7) d'aide au rabattement, ladite bande comprenant, disposées selon sa largeur, une zone médiane (8) disposée entre une première (9) et une deuxième (10) zone latérale,
• associer lesdits empiècements entre eux par une couture de liaison (4) formant un talon (5) saillant vers l'intérieur de ladite coiffe, ladite première zone étant disposée en recouvrement de la face dudit talon correspondant audit deuxième empiècement, ladite première zone présentant un bord libre (11) pointant vers le bord libre (12) dudit talon et un bord non libre (13) associé par ladite couture de liaison,
• agripper ladite bande par ladite deuxième zone pour la replier d'un demi-tour, de manière à disposer ladite zone médiane en recouvrement de ladite première zone et à rabattre ledit talon contre l'envers dudit premier empiècement,
• réaliser sur la ligne de séparation entre ladite zone médiane et ladite deuxième zone et dans ledit talon une couture d'aspect parallèle à ladite couture de liaison.

## Patentansprüche

1. Überzug (1) zum Verkleiden einer Auspolsterung eines Kraftfahrzeug-Sitzelements, wobei der Überzug umfasst:
- ein erstes (2) und ein zweites (3) Verkleidungsteil, die über eine Verbindungsnaht (4) aneinander befestigt sind, wobei eine Wulst (5) gebildet wird, die zum Inneren des Überzugs hin vorspringt,
- eine Sichtnaht (6), die im ersten Teil in Nähe der Verbindungsnaht und parallel zu derselben ausgeführt ist, wobei die Wulst gegen die Rückseite des ersten Teils umgeschlagen und in der Sichtnaht gefasst ist,
wobei der Überzug **dadurch gekennzeichnet ist, dass** er weiter ein Band (7) zur Hilfe beim Umschlagen der Wulst umfasst, wobei das Band, seiner Breite nach angeordnet, einen Mittelbereich (8) umfasst, der zwischen einem ersten (9) und einem zweiten (10) Seitenbereich angeordnet ist, wobei der zweite Seitenbereich dazu vorgesehen ist, einen Griffbereich zu bilden, um die Umschlaghilfe herzustellen, wobei das Band im Querschnitt nacheinander aufweist:
- den ersten Bereich, der die Seite der Wulst bedeckt, die dem zweiten Teil entspricht, wobei der erste Bereich einen freien Rand (11) aufweist, der zum freien Rand (12) der Wulst hin zeigt, und einen nicht freien Rand (13), der über die Verbindungsnaht befestigt ist,
- eine Biegung (14) um eine halbe Umdrehung,
- den Mittelbereich, der in Abdeckung des ersten Bereichs angeordnet ist,
- eine Trennlinie (15) zwischen dem Mittelbereich und dem zweiten Bereich, wobei die Linie in der Sichtnaht gefasst ist,
- den zweiten Bereich, der sich über die Sichtnaht hinaus erstreckt.

2. Überzug nach Anspruch 1, **dadurch gekennzeichnet, dass** der freie Rand (11) des ersten Bereichs (9) Rand an Rand mit dem freien Rand (12) der Wulst (5) angeordnet ist.

3. Überzug nach einem der Ansprüche 1 oder 2, **dadurch gekennzeichnet, dass** die Breite des flach ausgebreiteten Umschlaghilfsbandes (7) größer oder gleich 18 mm ist, wobei sie insbesondere in der Größenordnung von 20 mm beträgt.

4. Überzug nach einem der Ansprüche 1 bis 3, **dadurch gekennzeichnet, dass** die Breite des zweiten Bereichs (10) größer oder gleich 8 mm ist.

5. Überzug nach einem der Ansprüche 1 bis 4, **dadurch gekennzeichnet, dass** die Breite der Wulst (5) kleiner oder gleich 4 mm ist.

6. Überzug nach einem der Ansprüche 1 bis 5, **dadurch gekennzeichnet, dass** das Umschlaghilfsband (7) auf Vliesbasis ist.

7. Polsterung, die einen Überzug nach einem der Ansprüche 1 bis 6 und einen Polsterblock umfasst, wobei der Überzug den Block verkleidet.

8. Kraftfahrzeug-Sitzelement, das eine Polsterung nach Anspruch 7 und einen Rahmen umfasst, wobei die Polsterung am Rahmen befestigt ist.

9. Verfahren zur Herstellung eines Überzugs nach einem der Ansprüche 1 bis 6, wobei das Verfahren die folgenden Schritte umfasst:
- Bereitstellen eines ersten (2) und eines zweiten (3) Verkleidungsteils,
- Bereitstellen eines Umschlaghilfsbandes (7), wobei das Band, seiner Breite nach angeordnet, einen Mittelbereich (8) umfasst, der zwischen einem ersten (9) und einem zweiten (10) Seitenbereich angeordnet ist,
- Befestigen der Teile aneinander über eine Verbindungsnaht (4), welche eine Wulst (5) bildet, die zum Inneren des Überzugs hin vorspringt, wobei der erste Bereich in Abdeckung der Seite der Wulst angeordnet ist, die dem zweiten Teil entspricht, wobei der erste Bereich einen freien Rand (11) aufweist, der zum freien Rand (12) der Wulst hin zeigt, und einen nicht freien Rand (13), der über die Verbindungsnaht befestigt wird,
- Greifen des Bandes am zweiten Bereich, um es um eine halbe Umdrehung umzubiegen, um den Mittelbereich in Abdeckung des ersten Bereichs anzuordnen und um die Wulst gegen die Rückseite des ersten Teils umzuschlagen,
- Herstellen, auf der Trennlinie zwischen dem Mittelbereich und dem zweiten Bereich und in der Wulst, einer zur Verbindungsnaht parallelen Sichtnaht.

## Claims

1. Cover (1) for coating a lining cushion of a motor vehicle seat element, said cover comprising:
- a first (2) and a second (3) coating insert associated with one another by a connecting seam (4) forming a heel (5) projecting towards the inside of said cover,
- an aspect seam (6) created in said first insert in the vicinity of said connecting seam and parallel to it, said heel being folded against the reverse of said first insert and being made in said aspect seam,
said cover being **characterised in that** it further comprises a strip (7) for assisting in the folding back of said heel, said strip comprising, arranged along the length thereof, a median region (8) arranged between a first (9) and a second (10) lateral region, said second lateral region being intended to form a region of gripping in order to provide the assistance with folding back, said strip having successively as a cross-section:
- said first region covering the face of said heel corresponding to said second insert, said first region having a free edge (11) pointing towards the free edge (12) of said heel and a non-free edge (13) associated by said connecting seam,
- a fold (14) of a half-turn,
- said median region arranged overlapping said first region,
- a separation line (15) between said median region and said second region, said line being made in said aspect seam,
- said second region extending beyond said aspect seam.

2. Cover according to claim 1, **characterised in that** the free edge (11) of the first region (9) is arranged edge-to-edge with the free edge (12) of the heel (5).

3. Cover according to one of claims 1 or 2, **characterised in that** the width of the strip (7) for assisting in the folding back flat is greater than or equal to 18 mm, being in particular of about 20 mm.

4. Cover according to any of claims 1 to 3, **characterised in that** the width of the second region (10) is greater than or equal to 8 mm.

5. Cover according to any of claims 1 to 4, **characterised in that** the width of the heel (5) is less than or equal to 4 mm.

6. Cover according to any of claims 1 to 5, **characterised in that** the strip (7) for assisting in the folding back has a non-woven base.

7. Cushion comprising a cover according to any of claims 1 to 6 and block of padding, said cover covering said block.

8. Motor vehicle seat element comprising a cushion according to claim 7 and a reinforcement, said cushion being associated with said armature.

9. Method for producing a cover according to any of claims 1 to 6, said method comprising the following steps:
- providing a first (2) and a second (3) coating insert,
- providing a strip (7) for assisting with the folding back, said strip comprising, arranged along the length thereof, a median region (8) arranged between a first (9) and a second (10) lateral region,
- associating said inserts with one another by a connecting seam (4) forming a heel (5) projecting towards the inside of said cover, said first region being arranged overlapping the face of said heel corresponding to said second insert, said first region having a free edge (11) pointing towards the free edge (12) of said heel and a non-free edge (13) associated by said connecting seam,
- gripping said strip by said second region in order to fold it by a half-turn, in such a way as to arrange said median region overlapping said first region and to fold back said heel against the reverse of said first insert,
- creating on the separation line between said median region and said second region and in said heel an aspect seam parallel to said connecting seam.
